# EUROPEAN PATENT APPLICATION

(11) **EP 4 733 534 A1**
(43) Date of publication of application: **29.04.2026**
(21) Application number: 25158748.1
(22) Date of filing: 19.02.2025
(51) Int. Cl.: E06B 3/968, E06B 3/964, E06B 3/984, E06B 7/08, E06B 1/36, E06B 1/52

(54) **ADJUSTING STRUCTURE AND LOUVER WINDOW WITH ADJUSTABLE DIVIDING STRUCTURE**

(30) Priority: 23.10.2024 TW 113211496 U
(71) Applicant: Union Winner International Co., Ltd., Taipei City 103 (TW)
(72) Inventor: PAI, Ming-Tsung, Caotun Township 542 (TW)
(74) Representative: Straus, Alexander

(57) **Abstract**

The present invention relates to an adjusting structure (1) which is configured to be disposed between a first element and a second element. The adjusting structure (1) includes a connecting piece (11) which has a first fastened portion (111) and a second fastened portion (112) formed on the first fastened portion (111). Through the first fastened portion (111) and the second fastened portion (112), the connecting piece (11) is combined between the first element and the second element. As a result, when the second element is positioned on the first element inaccurately, the connecting piece (11) enables the second element to be adjusted in position on the first element, that prevents the second element from deviation in installation.

## Description

### BACKGROUND OF THE INVENTION

### 1. Field of the Invention

The present invention relates to an adjusting structure and a louver window with an adjustable dividing structure, wherein the adjusting structure is installed in a window frame structure of the louver window, and an adjustable mechanism is achieved through the assembly relationship of components so that the window frame deviated during installation can be adjusted to the correct position.

### 2. Description of the Related Art

During a window being installed on the wall, a window frame is firstly installed into a reserved opening on the wall, so that the size of the window is determined. If it is a large-area window, there is generally a support structure between window leaves, which is called T-pillar, for dividing the window leaves and providing firm connection between the window leaves.

China Patent No. 217760713 U provides a securing structure for a T-pillar, wherein a front connector and a rear connector are installed on a jamb of a window frame so that when the T-pillar is installed, the T-pillar, through inner grooves thereof, is sleeved onto insert portions of the front connector and the rear connector. Then, the front connector and the rear connector are further fastened in the T-pillar with screws to increase the firmness of the installation of the T-pillar. However, during the installation of the window, if the T-pillar is not installed exactly at the center of the window frame, it causes different sizes to the space at two sides of the T-pillar. That may disable the installation of window leaves or cause the window leaves, after they are installed, the problem of not sliding smoothly, because the window leaves mostly have fixed size.

US Patent No. 10415617 B2 disclosed a connecting structure of a window frame, which is composed of a first engaging member and a second engaging member. The second engaging member is fastened to the T-pillar. The first engaging member is clamped between the T-pillar and the second engaging member, and fastened to a jamb of the window frame. In this way, the position of the T-pillar can be fine-tuned with the connecting structure, and the adjustable range thereof is defined by the size of a slot of the first engaging member. In the patent, two engaging members are utilized for the fine tuning of the position of the T-pillar, that is relatively complicated in structure. Besides, the two engaging members should be tightly abutted against each other for fastening. After long-term use, that is liable to cause deformation of the engaging members and the resulting looseness of the T-pillar.

Therefore, the inventor made effort to think about how to use a relatively simpler connecting structure to connect the T-pillar with the jamb and enable the position of the T-pillar to be adjusted.

### SUMMARY OF THE INVENTION

In view of the above description that the existing dividing structures of louver windows still have many shortcomings in actual implementation and use, the inventor uses rich professional knowledge and years of practical experience thereof to make an improvement, and creates the present invention accordingly.

To attain the above objective, the present invention provides a louver window with an adjustable dividing structure, which includes a plurality of jambs, at least one vertical pillar, and a connecting piece disposed between one of the jambs and an end of the vertical pillar. The connecting piece has a first fastened portion and a second fastened portion formed on the first fastened portion. When the connecting piece is combined with the vertical pillar, the vertical pillar and the connecting piece are movable on the jamb together.

In an embodiment of the present invention, the second fastened portion of the connecting piece protrudes from the center of the first fastened portion. At least one end of the first fastened portion is provided with a fastening groove. The second fastened portion is provided with at least one fastening hole.

In an embodiment of the present invention, a first fastener is inserted through the fastening groove of the first fastened portion, and at least one second fastener is inserted through the fastening hole of the second fastened portion. The connecting piece is combined to one of the jambs with the first fastener. The connecting piece is combined to the vertical pillar with the second fastener.

In an embodiment of the present invention, the second fastened portion of the connecting piece protrudes from the center of the first fastened portion. At least one end of the first fastened portion is provided with a fastening groove.

In an embodiment of the present invention, a first fastener is inserted through the fastening groove of the first fastened portion, and at least one second fastener is formed on the second fastened portion. The connecting piece is combined to one of the jambs with the first fastener. The connecting piece is combined to the vertical pillar with the second fastener.

In an embodiment of the present invention, the vertical pillar is formed on the bottom side thereof with a vertical pillar fastened portion. At least one end of the first fastened portion of the connecting piece is provided with a fastening groove. The second fastened portion is provided with at least one fastening hole.

In an embodiment of the present invention, a first fastener is inserted through the fastening groove of the first fastened portion, and at least one second fastener is inserted through the fastening hole of the second fastened portion. The connecting piece is combined to one of the jambs with the first fastener. The connecting piece is combined to the vertical pillar fastened portion of the vertical pillar with the second fastener.

In an embodiment of the present invention, at least one end of the first fastened portion of the connecting piece is further provided with a fastening hole. A third fastener is inserted through the fastening hole of the first fastened portion for combining the connecting piece to one of the jambs.

In an embodiment of the present invention, the fastening hole of the first fastened portion of the connecting piece may be located adjacent to the fastening groove.

In an embodiment of the present invention, the plurality of jambs of the louver window have a recess for accommodating the connecting piece in a way that the connecting piece is movable in the recess.

In an embodiment of the present invention, two covering pieces are further included, which cover the connecting piece. The two covering pieces collectively form an opening. The opening is located correspondingly to the second fastened portion of the connecting piece.

In an embodiment of the present invention, an end of each of the two covering pieces is formed with a gradually narrowing portion and an open groove surrounded by the gradually narrowing portion. When the two covering pieces are abutted against each other, the open grooves of the two covering pieces collectively form the opening.

In an embodiment of the present invention, a covering piece is further included, which covers the connecting piece. The covering piece is formed with an opening. The opening is located correspondingly to the second fastened portion of the connecting piece.

In an embodiment of the present invention, the covering piece has two bending portions located adjacent to two sides of the opening respectively.

It is another objective of the present invention to provide an adjusting structure, which is disposed between a first element and a second element. The adjusting structure includes a connecting piece having a first fastened portion and a second fastened portion formed on the first fastened portion. When the connecting piece is combined with the second element, the second element and the connecting piece are movable on the first element together.

### BRIEF DESCRIPTION OF THE DRAWINGS

FIG. 1 is an assembled view of an adjusting structure of an embodiment of the present invention.
FIG. 2 is an exploded view of the adjusting structure of the embodiment of the present invention.
FIG. 3 is a schematic view showing the application of the adjusting structure of the embodiment of the present invention in a louver window.
FIG. 4 is an exploded view showing the application of the adjusting structure of the embodiment of the present invention in the louver window.
FIG. 5 is another exploded view showing the application of the adjusting structure of the embodiment of the present invention in the louver window.
FIG. 6 is still another exploded view showing the application of the adjusting structure of the embodiment of the present invention in the louver window and showing second fasteners being formed on a second fastened portion.
FIG. 7 is a schematic view showing the displacement of the adjusting structure of the embodiment of the present invention and a vertical pillar.
FIG. 8 is an exploded view of the adjusting structure of the embodiment of the present invention with another covering piece.
FIG. 9 is a schematic view showing the operation of the aforementioned another covering piece of the adjusting structure of the embodiment of the present invention.
FIG. 10 is an exploded view showing the application of an adjusting structure of another embodiment of the present invention in a louver window.
FIG. 11 is another exploded view showing the application of the adjusting structure of the aforementioned another embodiment of the present invention in a louver window.

### DETAILED DESCRIPTION OF THE INVENTION

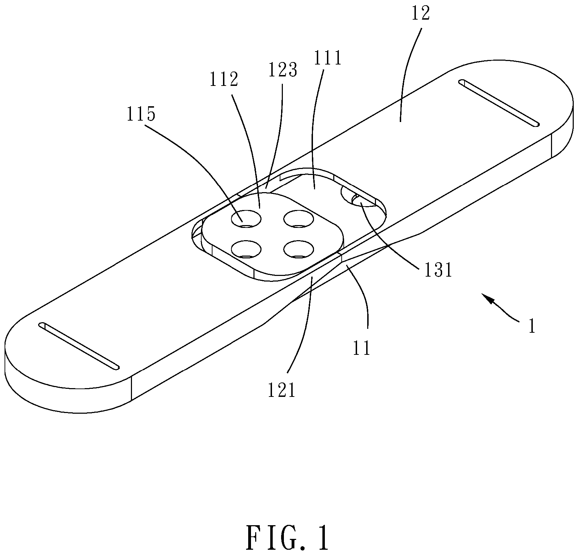

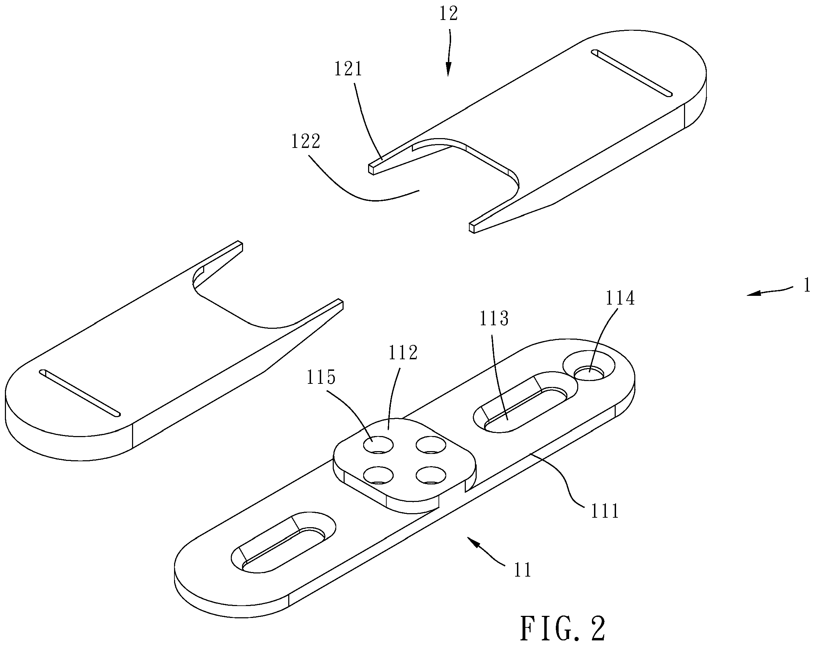

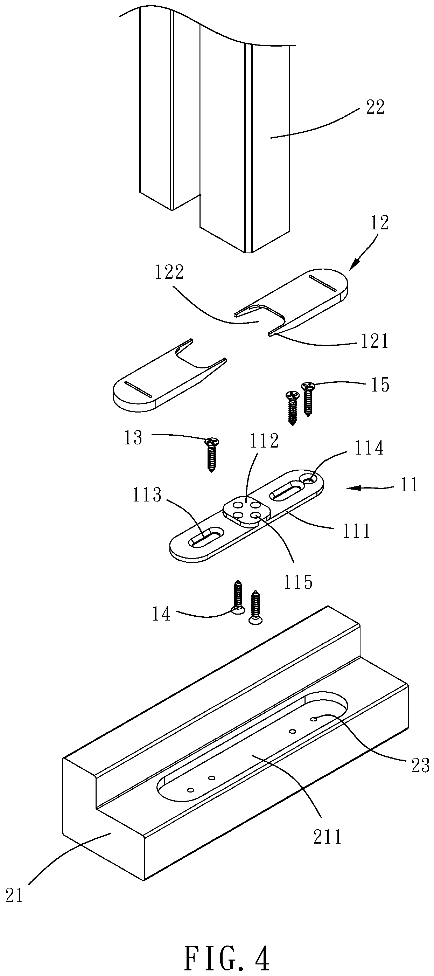

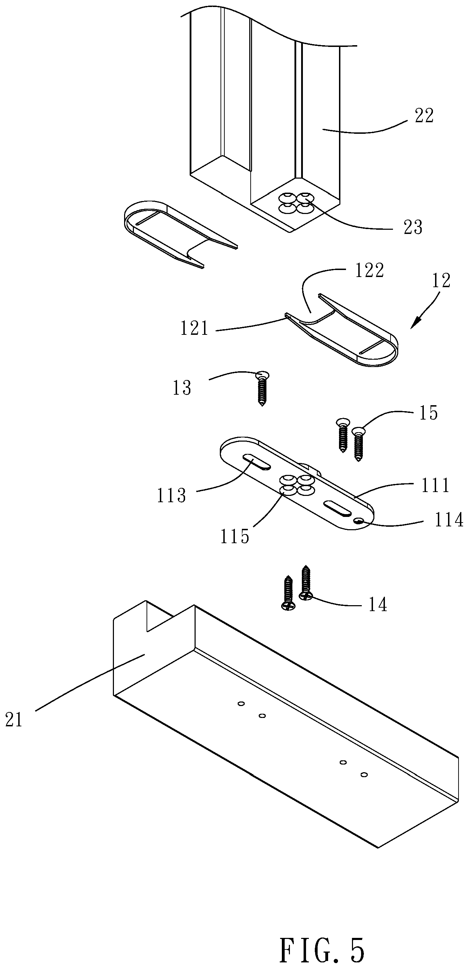

Referring to FIG. 1 to FIG. 5, an adjusting structure 1 of the present invention is primarily disposed between a first element and a second element. The first element and the second element may be, for example, a window frame structure of a louver window 2. The adjusting structure 1 includes a connecting piece 11, and two covering pieces 12.

The connecting piece 11 has a first fastened portion 111 and a second fastened portion 112. At least one end of the first fastened portion 111 is provided with a fastening groove 113, and one of the ends may be further provided with a fastening hole 114. The fastening hole 114 is located adjacent to one of the fastening grooves 113. The second fastened portion 112 is formed on the first fastened portion 111 and protrudes from the center thereof. The second fastened portion 112 is provided with at least one fastening hole 115.

The two covering pieces 12 are both provided at an end thereof with a gradually narrowing portion 121 and an open groove 122. The covering piece 12 gradually narrows toward the end of the open groove 122 communicating with the outside, thereby formed with the gradually narrowing portion 121. The open groove 122 is surrounded by the gradually narrowing portion 121. When the covering pieces 12 cover the connecting piece 11, the gradually narrowing portions 121 of the two covering pieces 12 are abutted against each other, and the two open grooves 122 collectively form an opening 123 for the second fastened portion 112 of the connecting piece 11 to be inserted through the opening 123. In this status, the gradually narrowing portions 121 surround the periphery of the second fastened portion 112 of the connecting piece 11. The other portions of the covering pieces 12 cover two ends of the first fastened portion 111 of the connecting piece 11.

The window frame structure of the louver window 2 primarily has a plurality of jambs 21, and at least one vertical pillar 22. The jambs 21 serve as the first element. The vertical pillar 22 serves as the second element. The jambs 21 are disposed at the reserved position on a building wall for a window. If it is a quadrilateral window, it is provided with four jambs 21. The vertical pillar 22 is the T-pillar of the window frame, which is perpendicular to the upside and downside jambs 21. Two ends of the vertical pillar 22 are connected to the upside and downside jambs 21 respectively to serve as the dividing structure.

When the adjusting structure 1 is applied in the louver window 2, it is disposed between one of the jambs 21 and an end of the vertical pillar 22. First fasteners 13 are inserted through the fastening grooves 113 of the first fastened portion 111 of the connecting piece 11. Second fasteners 14 are inserted through the fastening holes 115 of the second fastened portion 112 of the connecting piece 11. The first fasteners 13 and the second fasteners 14 may be, for example, screws. The jamb 21 and the vertical pillar 22 are provided with fastening holes 23 corresponding to the fastening grooves 113 and the fastening holes 115 of the connecting piece 11. The second fasteners 14 are screwed into the fastening holes 23 on the bottom surface of the vertical pillar 22, and then the first fasteners 13 are screwed into the fastening holes 23 on the top surface of the jamb 21. In this way, the connecting piece 11 is fastened between the jamb 21 and the vertical pillar 22, and the vertical pillar 22 is also fastened to the jamb 21 through the connecting piece 11. If the jamb 21 is provided with a recess 211, the connecting piece 11 can be fastened in the recess 211 of the jamb 21.

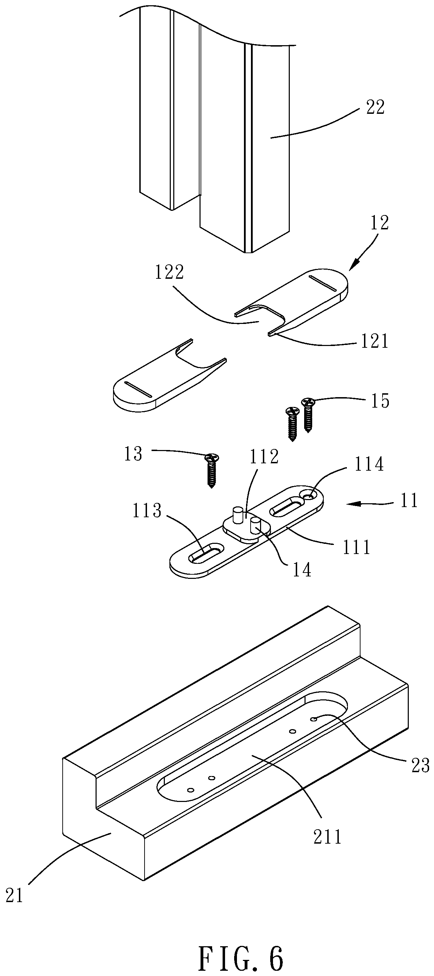

The second fastened portion 112 may be not provided with the fastening holes 115, but directly formed with second fasteners 14. These second fasteners 14 are configured as cylinders, as shown in FIG. 6. The second fasteners 14 and the connecting piece 11 are fastened to the fastening holes 23 of the vertical pillar 22 in a tenoned manner.

Referring to FIG. 1 to FIG. 5, the two covering pieces 12 are inserted from two sides of the vertical pillar 22. The vertical pillar 22 and the jamb 21 have a distance therebetween, depending on the thickness of the first fastened portion 111 and the second fastened portion 112 of the connecting piece 11. Besides, the width of the connecting piece 11 is smaller than the width of the recess 211. Therefore, the gradually narrowing portions 121 of the covering pieces 12 can be firstly inserted into the gap between the vertical pillar 22, the jamb 21 and the connecting piece 11, and then the covering pieces 12 are completely placed into the recess to cover two ends of the first fastened portion 111 of the connecting piece 11. At last, hardware elements, such as hinges, can be installed to the vertical jamb 21 and the vertical pillar 22, and then a frame having slats 24 is combined between the jamb 21 and the vertical pillar 22. The present invention takes the louver window as the embodiment, but the adjusting structure 1 is unlimited to be installed on the louver window. All the window frame structures requiring the installation of the vertical pillar 22 between two window leaves can use this adjusting structure 1.

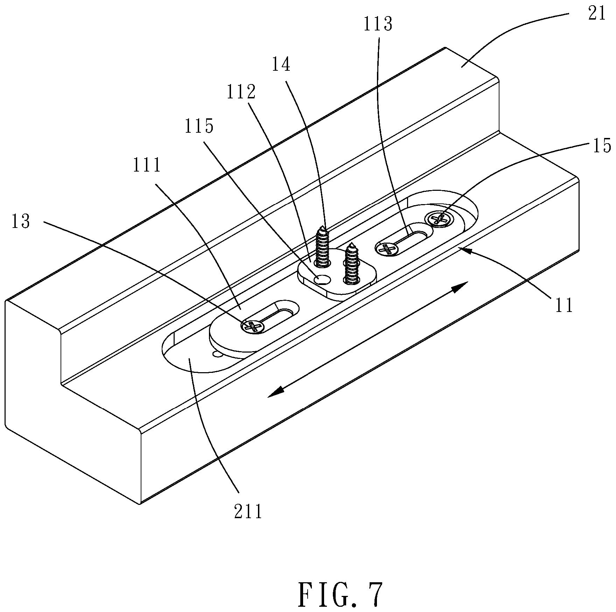

Referring to FIG. 7, if the frame having the slats 24 is installed and tested in opening and closing but doesn't open and close smoothly, it indicates that the vertical pillar 22 is not accurately installed at the centers of the upside and downside jambs 21. Then, firstly remove the two covering pieces 12 from two sides of the vertical pillar 22 to expose two ends of the first fastened portion 111 of the connecting piece 11. After that, loosen the first fasteners 13 inserted through the fastening grooves 113. In this status, the connecting piece 11 is not fastened to the jamb 21, but still fastened to the vertical pillar 22 with the second fastener 14. The vertical pillar 22 is also not fastened to the jamb 21 through the connecting piece 11, so the vertical pillar 22 is in the movable state. When the position of the vertical pillar 22 is adjusted along the jamb 21, the connecting piece 11 fastened to the vertical pillar 22 is also moved. Because the connecting piece 11 is accommodated in the recess 211 of the jamb 21, the adjustable range of the vertical pillar 22 is defined by the length of the recess 211 of the jamb 21.

After the vertical pillar 22 is adjusted to the correct position, the first fasteners 13 are inserted through the fastening grooves 113 of the first fastened portion 111 and screwed into the fastening holes 23 in the recess 211 of the jamb 21 to fasten the connecting piece 11 and the vertical pillar 22 to the jamb 21. After the covering pieces 12 are set, the adjustment of the position of the vertical pillar 22 is accomplished. The vertical pillar 22 in the present invention is not directly fastened to the jamb 21. When the position of the vertical pillar 22 needs to be adjusted, the position can be fine-tuned through the connecting piece 11. Wherein, the jamb 21 can be provided with a plurality of fastening holes 23 for the connecting piece 11 to be fastened at different positions.

To increase the firmness of the connecting piece 11 and the vertical pillar 22 being fastened to the jamb 21, a third fastener 15 may be also used. The third fastener 15 may be, for example, a screw. The third fastener 15 is inserted through the fastening hole 114 beside the fastening groove 113 and then screwed into one of the fastening holes 23 in the recess 211 of the jamb 21. Because the fastening hole 114 is an independent hole, the third fastener 15 can be firmly fastened in the fastening hole 114 of the first fastened portion 111 and the fastening hole 23 of the jamb 21 even when the vertical pillar 22 is accidentally hit. That prevents the vertical pillar 22 from horizontal displacement and the resulting positional deviation.

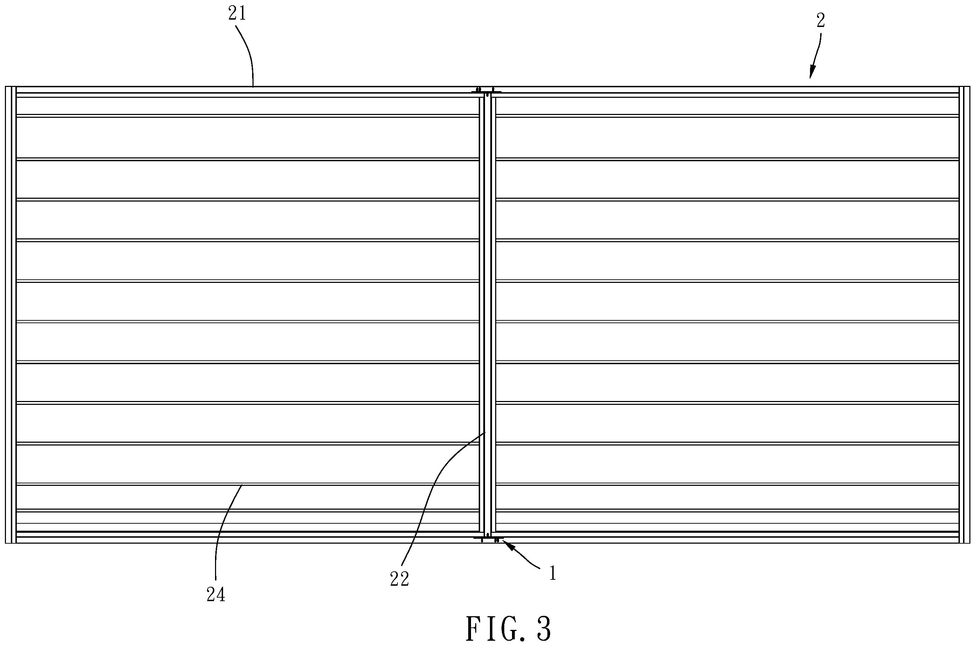

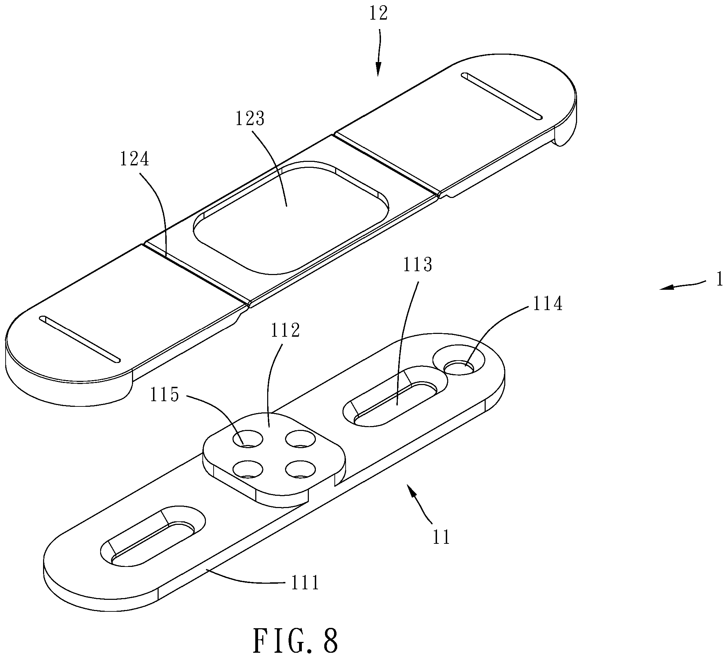

The covering piece 12 of the adjusting structure 1 of the present invention may be a single piece. Referring to FIG. 3 and FIG. 8, after the second fasteners 14 are inserted through the fastening holes 115 of the second fastened portion 112 of the connecting piece 11, the covering piece 12 covers the connecting piece 11 in a way that the second fastened portion 112 of the connecting piece 11 is inserted through the opening 123 of the covering piece 12. The second fasteners 14 are inserted through the opening 123 of the covering piece 12 and then screwed into the fastening holes 23 on the bottom surface of the vertical pillar 22. In this way, the connecting piece 11 and the covering piece 12 are fastened between the jamb 21and the vertical pillar 22, and the vertical pillar 22 is also fastened to the jamb 21 through the connecting piece 11 and the covering piece 12. In this status, the covering piece 12 covers two ends of the first fastened portion 111 of the connecting piece 11.

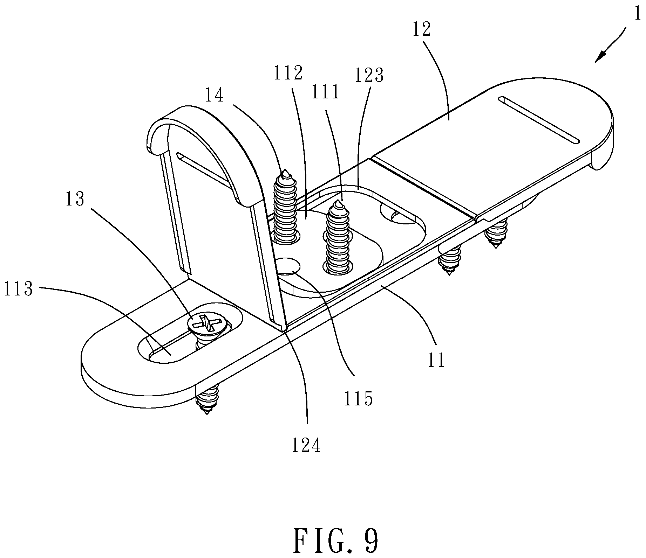

The covering piece 12 has bending portions 124 located adjacent to two sides of the opening 123. When the position of the vertical pillar 22 needs to be adjusted, the covering piece 12 can be bent at the bending portion 124 so that an end of the covering piece 12 is lifted up, as shown in FIG. 9, thereby exposing the fastening groove 113 of the first fastened portion 111 of the connecting piece 11. When the first fasteners 13 inserted through the fastening grooves 113 are loosened, the connecting piece 11 is not fastened to the jamb 21, but still fastened to the vertical pillar 22 with the second fasteners 14. The covering piece 12 is clamped between the connecting piece 11 and the vertical pillar 22. The vertical pillar 22 is also not fastened to the jamb 21 through the connecting piece 11 and the covering piece 12, so the vertical pillar 22 is in the movable state. After the vertical pillar 22 is adjusted to the correct position, the first fasteners 13 are inserted through the fastening grooves 113 of the first fastened portion 111 and screwed into the fastening holes 23 in the recess 211 of the jamb 21, and the third fastener 15 can be screwed into the fastening hole 114. Then, flatten the bending portions 124 to make the covering piece 12 cover two ends of the first fastened portion 111 of the connecting piece 11, such that the position adjusting process for the vertical pillar 22 is accomplished.

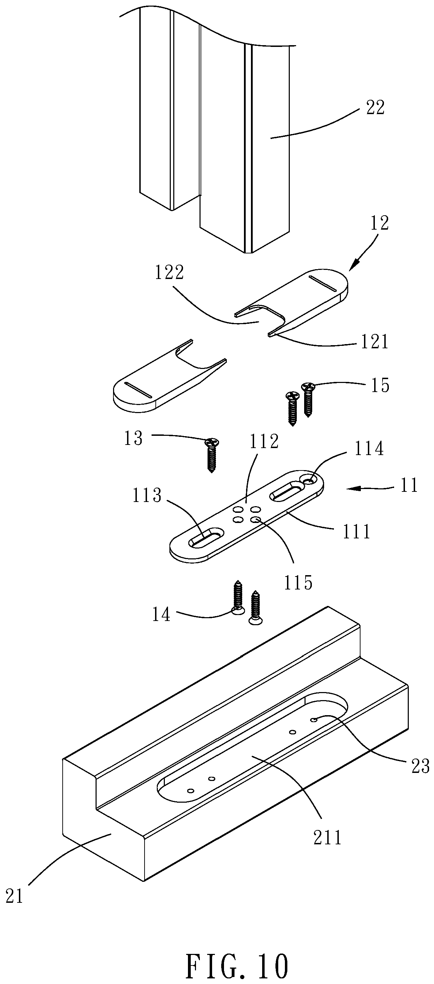

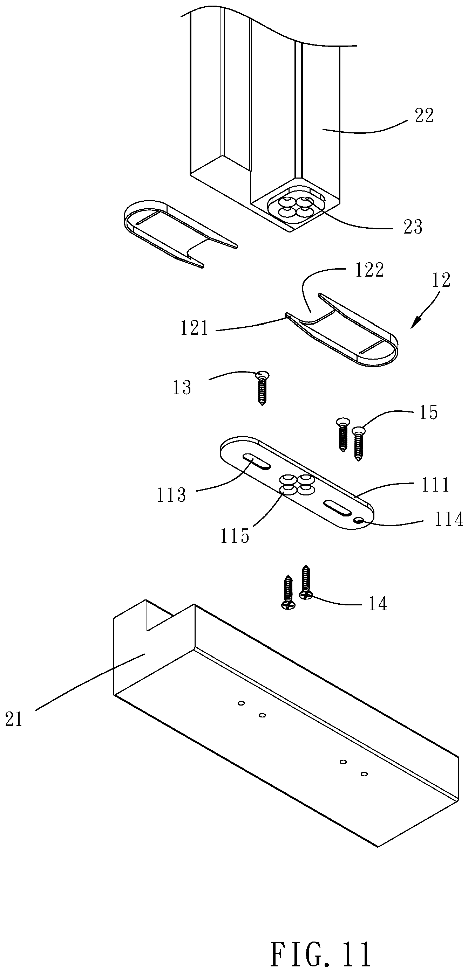

Referring to FIG. 10 and FIG. 11, in the adjusting structure 1 of the present invention, the first fastened portion 111 and the second fastened portion 112 of the connecting piece 11 may be coplanar. A vertical pillar fastened portion 221 is formed on the bottom side of the vertical pillar 22 and protrudes therefrom. The second fastened portion 112 is still provided with at least one fastening hole 115. During the assembly, the second fasteners 14 are inserted through the fastening holes 115 of the second fastened portion 112 and then screwed into the vertical pillar fastened portion 221 of the vertical pillar 22 to fasten the connecting piece 11 to the vertical pillar 22. The structure and assembling manner of other components are as described in the above embodiment, thereby not repeatedly described here.

In conclusion, the adjusting structure and the louver window with the adjustable dividing structure provided by the present invention at least have the following advantages when compared with the existing technique.
1. The adjusting structure and the louver window with the adjustable dividing structure of the present invention use the connecting piece disposed between the first element and the second element as the adjusting structure. When the connecting piece is combined with the second element but not combined with the first element, the connecting piece and the second element are movable on the first element simultaneously. After the position is determined, the connecting piece is combined to the first element. In this way, the second element is adjustable in position on the first element.
2. In the adjusting structure and the louver window with the adjustable dividing structure of the present invention, the adjusting structure is applicable to the window frame structure of the louver window. When the construction worker installs the window frame, the vertical pillar needs to be fastened to the jamb through the connecting piece. Therefore, when the connecting piece is not fastened to the jamb, the vertical pillar is movable so that the vertical pillar can be fine-tuned to the correct installation position.
3. The adjusting structure and the louver window with the adjustable dividing structure of the present invention only use the connecting piece of single-piece type as the adjusting structure. That avoids complicated structural design, avoids such problems caused by long-term use as poor closeness and deformation, and can improve the convenience of installation and reduce costs.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A louver window (2) with an adjustable dividing structure, the louver window (2) being **characterized in** comprising:
a plurality of jambs (21);
at least one vertical pillar (22); and
a connecting piece (11) disposed between one of the jambs (21) and an end of the vertical pillar (22), the connecting piece (11) having a first fastened portion (111) and a second fastened portion (112) formed on the first fastened portion (111);
wherein when the connecting piece (11) is only combined with the vertical pillar (22), the vertical pillar (22) and the connecting piece (11) are movable relative to the plurality of jambs (21) together.

2. The louver window (2) as claimed in claim 1, which is **characterized in that** the second fastened portion (112) of the connecting piece (11) protrudes from a center of the first fastened portion (111); at least one end of the first fastened portion (111) is provided with a fastening groove (113); the second fastened portion (112) is provided with at least one fastening hole (115);
Preferably which is **characterized in that** a first fastener (13) is inserted through the fastening groove (113) of the first fastened portion (111), and at least one second fastener (14) is inserted through the fastening hole (115) of the second fastened portion (112); the connecting piece (11) is combined to said one of the jambs (21) with the first fastener (13); the connecting piece (11) is combined to the vertical pillar (22) with the second fastener (14).

3. The louver window (2) as claimed in claim 1, which is **characterized in that** the second fastened portion (112) of the connecting piece (11) protrudes from a center of the first fastened portion (111); at least one end of the first fastened portion (111) is provided with a fastening groove (113);
preferably which is **characterized in that** a first fastener (13) is inserted through the fastening groove (113) of the first fastened portion (111), and at least one second fastener (14) is formed on the second fastened portion (112); the connecting piece (11) is combined to said one of the jambs (21) with the first fastener (13); the connecting piece (11) is combined to the vertical pillar (22) with the second fastener (14).

4. The louver window (2) as claimed in claim 1, which is **characterized in that** the vertical pillar (22) is formed on a bottom side thereof with a vertical pillar fastened portion (221); at least one end of the first fastened portion (111) of the connecting piece (11) is provided with a fastening groove (113); the second fastened portion (112) is provided with at least one fastening hole (115);
preferably which is **characterized in that** a first fastener (13) is inserted through the fastening groove (113) of the first fastened portion (111), and at least one second fastener (14) is inserted through the fastening hole (115) of the second fastened portion (112); the connecting piece (11) is combined to said one of the jambs (21) with the first fastener (13); the connecting piece (11) is combined to the vertical pillar fastened portion (221) of the vertical pillar (22) with the second fastener (14).

5. The louver window (2) as claimed in claim 2, 3 or 4, which is **characterized in that** at least one end of the first fastened portion (111) of the connecting piece (11) is provided with a fastening hole (114); a third fastener (15) is inserted through the fastening hole (114) of the first fastened portion (111) for combining the connecting piece (11) to said one of the jambs (21).

6. The louver window (2) as claimed in anyone of claims 1-5, which is **characterized in that** the plurality of jambs (21) has a recess (211) for accommodating the connecting piece (11); the connecting piece (11) is movable in the recess (211).

7. The louver window (2) as claimed in anyone of claims 1-6, which is **characterized in that** the louver window (2) further comprises two covering pieces (12) covering the connecting piece (11); the two covering pieces (12) collectively form an opening (123); the opening (123) is located correspondingly to the second fastened portion (112) of the connecting piece (11);
preferably which is **characterized in that** an end of each of the two covering pieces (12) is formed with a gradually narrowing portion (121) and an open groove (122) surrounded by the gradually narrowing portion (121); when the two covering pieces (12) are abutted against each other, the open grooves (122) of the two covering pieces (12) collectively form the opening (123).

8. The louver window (2) as claimed in anyone of claims 1-6, which is **characterized in that** the louver window (2) further comprises a covering piece (12) covering the connecting piece (11); the covering piece (12) is formed with an opening (123); the opening (123) is located correspondingly to the second fastened portion (112) of the connecting piece (11),
preferably, which is **characterized in that** the covering piece (12) has two bending portions (124) located adjacent to two sides of the opening (123) respectively.

9. An adjusting structure (1), which is disposed between a first element and a second element, the adjusting structure (1) being **characterized in** comprising:
a connecting piece (11) having a first fastened portion (111) and a second fastened portion (112) formed on the first fastened portion (111);
wherein when the connecting piece (11) is only combined with the second element, the second element and the connecting piece (11) are movable on the first element together.

10. The adjusting structure (1) as claimed in claim 9, which is **characterized in that** the second fastened portion (112) of the connecting piece (11) protrudes from a center of the first fastened portion (111); two ends of the first fastened portion (111) are both provided with a fastening groove (113); the second fastened portion (112) is provided with at least one fastening hole (115).

11. The adjusting structure (1) as claimed in claim 10, which is **characterized in that** a first fastener (13) is inserted through the fastening groove (113) of the first fastened portion (111), and at least one second fastener (14) is inserted through the fastening hole (115) of the second fastened portion (112); the connecting piece (11) is combined to the first element with the first fastener (13); the connecting piece (11) is combined to the second element with the second fastener (14).

12. The adjusting structure (1) as claimed in claim 9, which is **characterized in that** the second fastened portion (112) of the connecting piece (11) protrudes from a center of the first fastened portion (111); at least one end of the first fastened portion (111) is provided with a fastening groove (113),

13. The adjusting structure (1) as claimed in claim 12, which is **characterized in that** a first fastener (13) is inserted through the fastening groove (113) of the first fastened portion (111), and at least one second fastener (14) is formed on the second fastened portion (112); the connecting piece (11) is combined to the first element with the first fastener (13); the connecting piece (11) is combined to the second element with the second fastener (14).

14. The adjusting structure (1) as claimed in claim 10 or 12, which is **characterized in that** at least one end of the first fastened portion (111) of the connecting piece (11) is provided with a fastening hole (114); a third fastener (15) is inserted through the fastening hole (114) of the first fastened portion (111) for combining the connecting piece (11) to the first element,
preferably, which is **characterized in that** the fastening hole (114) of the first fastened portion (111) of the connecting piece (11) is located adjacent to the fastening groove (113).

15. The adjusting structure (1) as claimed in anyone of claims 9-14, which is **characterized in that** the adjusting structure (1) further comprises two covering pieces (12) covering the connecting piece (11); the two covering pieces (12) collectively form an opening (123) for the second fastened portion (112) of the connecting piece (11) to be inserted through the opening (123); preferably, which is **characterized in that** an end of each of the two covering pieces (12) is formed with a gradually narrowing portion (121) and an open groove (122) surrounded by the gradually narrowing portion (121); when the two covering pieces (12) are abutted against each other, the open grooves (122) of the two covering pieces (12) collectively form the opening (123);
or
which is **characterized in that** the adjusting structure (1) further comprises a covering piece (12) covering the connecting piece (11); the covering piece (12) is formed with an opening (123) for the second fastened portion (112) of the connecting piece (11) to be inserted through the opening (123); preferably, which is **characterized in that** the covering piece (12) has two bending portions (124) located adjacent to two sides of the opening (123) respectively.

## Amended claims

### Amended claims in accordance with Rule 137(2) EPC.

1. A louver window (2) with an adjustable dividing structure, the louver window (2) being **characterized in** comprising:
a plurality of jambs (21);
at least one vertical pillar (22); and
an adjusting structure (1) comprising:
a connecting piece (11) disposed between one of the jambs (21) and an end of the vertical pillar (22), the connecting piece (11) having a first fastened portion (111) and a second fastened portion (112) formed on the first fastened portion (111), a first fastener (13) being detachably inserted through the first fastened portion (111) such that the connecting piece (11) is detachably combined to said one of the jambs (21) with the first fastener (13), and when the connecting piece (11) is detached from said one of the jambs (21) so as to be only combined with the vertical pillar (22), the vertical pillar (22) and the connecting piece (11) are movable relative to the plurality of jambs (21) together; and
at least one covering piece (12) covering the connecting piece (11), the at least one covering piece (12) forming an opening (123), the opening (123) being located correspondingly to the second fastened portion (112) of the connecting piece (11);
wherein the first fastener (13) is covered by the covering piece (12).

2. The louver window (2) as claimed in claim 1, which is **characterized in that** the second fastened portion (112) of the connecting piece (11) protrudes from a center of the first fastened portion (111); at least one end of the first fastened portion (111) is provided with a fastening groove (113); the second fastened portion (112) is provided with at least one fastening hole (115);
preferably which is **characterized in that** the first fastener (13) is inserted through the fastening groove (113) of the first fastened portion (111), and at least one second fastener (14) is inserted through the fastening hole (115) of the second fastened portion (112); the connecting piece (11) is combined to the vertical pillar (22) with the second fastener (14).

3. The louver window (2) as claimed in claim 1, which is **characterized in that** the second fastened portion (112) of the connecting piece (11) protrudes from a center of the first fastened portion (111); at least one end of the first fastened portion (111) is provided with a fastening groove (113);
preferably which is **characterized in that** the first fastener (13) is inserted through the fastening groove (113) of the first fastened portion (111), and at least one second fastener (14) is formed on the second fastened portion (112); the connecting piece (11) is combined to the vertical pillar (22) with the second fastener (14).

4. The louver window (2) as claimed in claim 1, which is **characterized in that** the vertical pillar (22) is formed on a bottom side thereof with a vertical pillar fastened portion (221); at least one end of the first fastened portion (111) of the connecting piece (11) is provided with a fastening groove (113); the second fastened portion (112) is provided with at least one fastening hole (115);
preferably which is **characterized in that** the first fastener (13) is inserted through the fastening groove (113) of the first fastened portion (111), and at least one second fastener (14) is inserted through the fastening hole (115) of the second fastened portion (112); the connecting piece (11) is combined to the vertical pillar fastened portion (221) of the vertical pillar (22) with the second fastener (14).

5. The louver window (2) as claimed in claim 2, 3 or 4, which is **characterized in that** at least one end of the first fastened portion (111) of the connecting piece (11) is provided with a fastening hole (114); a third fastener (15) is inserted through the fastening hole (114) of the first fastened portion (111) for combining the connecting piece (11) to said one of the jambs (21).

6. The louver window (2) as claimed in anyone of claims 1-5, which is **characterized in that** the plurality of jambs (21) has a recess (211) for accommodating the connecting piece (11); the connecting piece (11) is movable in the recess (211).

7. The louver window (2) as claimed in anyone of claims 1-6, which is **characterized in that** the louver window (2) comprises two said covering pieces (12) collectively forming the opening (123);
preferably which is **characterized in that** an end of each of the two covering pieces (12) is formed with a gradually narrowing portion (121) and an open groove (122) surrounded by the gradually narrowing portion (121); when the two covering pieces (12) are abutted against each other, the open grooves (122) of the two covering pieces (12) collectively form the opening (123).

8. The louver window (2) as claimed in anyone of claims 1-6, which is **characterized in that** the louver window (2) comprises a said covering piece (12) formed with the opening (123);
preferably, which is **characterized in that** the covering piece (12) has two bending portions (124) located adjacent to two sides of the opening (123) respectively.

9. An adjusting structure (1), which is adapted to be disposed between a first element and a second element, the adjusting structure (1) being **characterized in** comprising:
a connecting piece (11) having a first fastened portion (111) and a second fastened portion (112) formed on the first fastened portion (111), a first fastener (13) being detachably inserted through the first fastened portion (111) such that the connecting piece (11) is detachably combined to the first element with the first fastener (13), and when the connecting piece (11) is detached from the first element so as to be only combined with the second element, the second element and the connecting piece (11) are movable on the first element together; and
at least one covering piece (12) covering the connecting piece (11), the at least one covering piece (12) forming an opening (123) for the second fastened portion (112) of the connecting piece (11) to be inserted through the opening (123);
wherein the first fastener (13) is covered by the covering piece (12).

10. The adjusting structure (1) as claimed in claim 9, which is **characterized in that** the second fastened portion (112) of the connecting piece (11) protrudes from a center of the first fastened portion (111); two ends of the first fastened portion (111) are both provided with a fastening groove (113); the second fastened portion (112) is provided with at least one fastening hole (115).

11. The adjusting structure (1) as claimed in claim 10, which is **characterized in that** the first fastener (13) is inserted through the fastening groove (113) of the first fastened portion (111), and at least one second fastener (14) is inserted through the fastening hole (115) of the second fastened portion (112); the connecting piece (11) is combined to the second element with the second fastener (14).

12. The adjusting structure (1) as claimed in claim 9, which is **characterized in that** the second fastened portion (112) of the connecting piece (11) protrudes from a center of the first fastened portion (111); at least one end of the first fastened portion (111) is provided with a fastening groove (113).

13. The adjusting structure (1) as claimed in claim 12, which is **characterized in that** the first fastener (13) is inserted through the fastening groove (113) of the first fastened portion (111), and at least one second fastener (14) is formed on the second fastened portion (112); the connecting piece (11) is combined to the second element with the second fastener (14).

14. The adjusting structure (1) as claimed in claim 10 or 12, which is **characterized in that** at least one end of the first fastened portion (111) of the connecting piece (11) is provided with a fastening hole (114); a third fastener (15) is inserted through the fastening hole (114) of the first fastened portion (111) for combining the connecting piece (11) to the first element,
preferably, which is **characterized in that** the fastening hole (114) of the first fastened portion (111) of the connecting piece (11) is located adjacent to the fastening groove (113).

15. The adjusting structure (1) as claimed in anyone of claims 9-14, which is **characterized in that** the adjusting structure (1) comprises two said covering pieces (12) collectively forming the opening (123); preferably, which is **characterized in that** an end of each of the two covering pieces (12) is formed with a gradually narrowing portion (121) and an open groove (122) surrounded by the gradually narrowing portion (121); when the two covering pieces (12) are abutted against each other, the open grooves (122) of the two covering pieces (12) collectively form the opening (123); or
which is **characterized in that** the adjusting structure (1) comprises a said covering piece (12) formed with the opening (123); preferably, which is **characterized in that** the covering piece (12) has two bending portions (124) located adjacent to two sides of the opening (123) respectively.
